# EUROPEAN PATENT SPECIFICATION

(11) **EP 1 914 932 B1**
(45) Date of publication and mention of the grant of the patent: **15.12.2010**
(21) Application number: 07117891.7
(22) Date of filing: 04.10.2007
(51) Int. Cl.: H04L 12/18

(54) **Method for optimising the transmission of DVB-IP service information by partitioning into several multicast streams**
Verfahren zur Optimierung der Übertragung von DVB-IP-Dienstinformationen durch Partitionierung in mehrere Multicast-Ströme
Procédé pour optimiser la transmission d'informations d'un service DVB-IP par la séparation en plusieurs flux de multidiffusion

(30) Priority: 19.10.2006 FR 0654383
(43) Date of publication of application: 23.04.2008
(73) Proprietor: Thomson Licensing, 92100 Boulogne-Billancourt (FR)
(72) Inventor: Houdaille, Rémi, 35510 Cesson Sevigne (FR); Henry, Jean-Baptiste, 35520 Melesse (FR); Fleury, Jean-François East Gate International Apartments, 100027 Beijing (CN)
(74) Representative: Deschamps, Samuel

(56) References cited:
- EP-A- 1 650 896
- WO-A-03/032576
- US-A1- 2004 198 371
- "Digital Video Broadcasting (DVB)" ETSI STANDARDS, EUROPEAN TELECOMMUNICATIONS STANDARDS INSTITUTE, SOPHIA-ANTIPO, FR, vol. BC, no. V111, March 2005 (2005-03), XP014033278 ISSN: 0000-0001

## Description

### Scope of the invention

The present invention relates to the field of video transmission.

The present invention relates more particularly to a method falling within the framework of DVB-IP (DVB meaning: *Digital Video Broadcasting* and IP meaning: *Internet Protocol).*

### Prior art

The DVB-IP specification (ETSI TS 102 034) describes a mechanism for signalling services based on a data structure described in XML and 2 transport protocols of this data: HTTP and DVBSTP. The same information is transmitted according to these 2 protocols and the use of one or other, or both is left to the choice of system designers. We are interested here only in the use of DVBSTP, independently from the possible simultaneous use of HTTP.

The DVBSTP protocol (DVB Sd&S Transport Protocol) is itself based on the UDP and IP protocols for transmitting the data on a multicast group in a cyclic manner (carousel).

A simple interpretation of the text of the specification leads to an IP multicast group address being used to broadcast all the service information corresponding to a service provider, even to regroup the information of several service providers in the same stream.

The DVB-IP standard is typically intended to transmit the service information and video content on the access link of an ADSL subscriber. This type of link comprises bandwidth limitations that involve managing the bitrates in the best manner possible. Even if the service information represents a low weight, the information must be reduced to leave room for the video stream for example.

The broadcasting of all the information of a service provider on a single multicast stream can represent a non-negligible bitrate when there are a large number of services. This bitrate has a low limit as the specification requires a cycle time (to broadcast all of the information) of less than 30 seconds.

A carousel grouping all the data of a provider on a single multicast group thus has the disadvantage of having a bandwidth cost that can prove to be too great with respect to the overall assignment of this bandwidth.

The maximum cycle time of the carousel was selected to ensure that the modification that arise in the data can be fully accounted for in a reasonable time, particularly during the start up of a terminal that has no memory of this information. The DVB-IP specification proposes to allow better access times by repeating information more frequently. This repetition can be selective according to the importance attached to the data to give priority to some of this data. But this possibility only enables the times to be shortened by increasing the bitrate received by the terminal.

Finally, it is considered in DVB to extend the specification to enable a "regional" availability of some services to be signalled (by adding a *"ServiceAvailability"* field). But these services are described in the carousel for all the terminals, which creates an unnecessary consumption of bandwidth, the terminal receiving the descriptions of service that it must ignore when they are not available for it.

The US patent application No. US 2004/198371 discloses a scalable quality broadcast service in a mobile wireless communication network. The solution of this prior US patent application is explicitly dedicated to the mobile terminals, whereas the present application applies to DVB-IP (now DVB-IPTV), which relates to wired communication networks. The solution of this prior US patent application is based on a dynamical adaptation of video (and/or audio) streams, realized by analysing the needs in bandwidth at a given time. The present invention does not imply any dynamical adaptation of the streams that are transmitted on the network. Furthermore, the present invention applies to service information streams and not to media contents.

PCT patent WO 03/032576 discloses a method and a server for announcing a multicast service, the announcement comprising a structured information document and being partitioned in a plurality of numbered sections. This way the maximum size of announcements can be increased substantially.

### Summary of the invention

The present invention intends to overcome the disadvantages of the prior art by proposing a solution that enables service information to be broadcast on IP type networks by shortening the recognition time of modifications arising in the data and by preventing the unnecessary consumption of bandwidth.

For this purpose, the present invention relates, in the most generally accepted sense, to a method for broadcasting service information data streams, comprising:
- a first step consisting in partitioning at least one part of the service information between the different streams, and
- a second step consisting in broadcasting the partition from the first step on at least two separate streams to a plurality of terminals.

Preferably, the service information data streams are multicast.

Advantageously, the service information data streams are compliant with the DVB-IP standard.

According to one mode of implementation the service information is split into segments and the said first step consists in assigning a stream to each segment.

According to one embodiment, some segments are assigned to the same stream.

The present invention also relates to a broadcast server of service information data streams, characterized in that it comprises:
- means for partitioning at least one part of the service information between the different streams, and
- means for broadcasting the partition from the first step on at least two separate streams to a plurality of terminals.

The method according to the present invention uses the fact that the specification does not forbid using several multicast streams to broadcast the service information of a same service provider. However, it remains silent as to the possible use and the interpretation of this possibility.

The method consists in partitioning the service information between the different multicast streams used to describe a service provider. This information being already split into "segments" by the DVB-IP specification, this therefore involves assigning to each segment one and one only multicast stream on which it will be present.

On each multicast stream, the cycle time of 30 seconds is respected. Hence, a terminal can acquire all the information of a service provider by connecting simultaneously to all of these multicast streams. The faculty of keeping the properties of the "normal" method is therefore maintained: same acquisition time for the same total bandwidth.

Each individual stream can be extremely reduced in size, such that a terminal wanting to save on bandwidth can do so by connecting to only one stream at a time. It retains the possibility of monitoring all the data by connecting successively to each of the streams (either by changing every 30 seconds, or by changing when it notices that it has received all of the data expected), only the update time is increased. Excluding the case of the starting up of the terminal, the update times are not critical, given that the service information modifications are rare.

The advantage of the method would be increased if an extension of the DVB-IP signalling were adopted, which would consist in adding the multicast streams of a provider to the existing description, enabling the terminal to establish listening priorities of the carousels.

The method according to the present invention has many advantages, among which the following are found:
- the procedure according to the present invention retains the characteristics of the conventional approach in terms of cycle time (guaranteed update time) for a same bandwidth cost, the terminal having the possibility of receiving all the streams in parallel,
- the method according to the present invention can realize carousels of very low bitrate, enabling a terminal to remain listening for changes of the data with a very low bandwidth cost,
- the service provider can carry out data classifications by carousel, which allows the terminal to monitor the data that interests it more particularly by connecting to the corresponding multicast stream, and by consuming only the useful bandwidth.

### Brief description of the drawings

The invention will be better understood from the following description of an embodiment of the invention provided as an example by referring to the annexed figures, wherein:
- figure 1 shows an input screen of segment <-> multicast group assignments for a server implementing the method according to the present invention, and
- figure 2 illustrates a time sequencing for a terminal implementing the method according to the present invention.

### Detailed description of the embodiments of the invention

In a server implementing the method according to the present invention, a modification form of a segment can be used to choose the assignment of this segment to one of the carousels broadcast by the service provider. The choice is made from a drop down list that shows the addresses of the possible multicast streams.

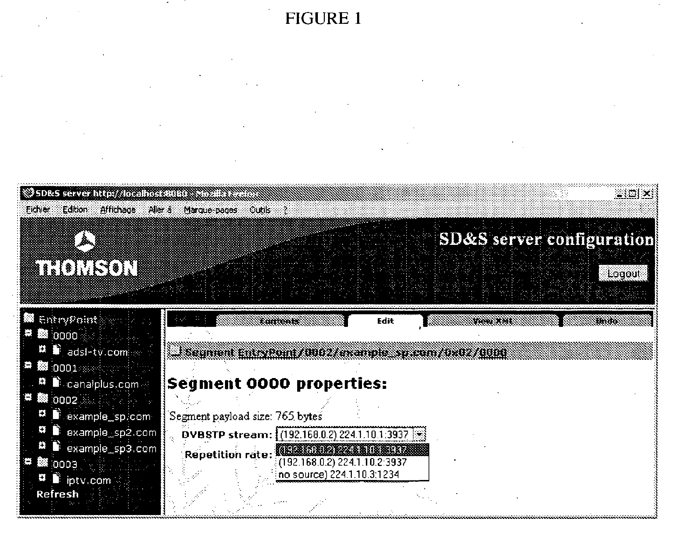

The screen shown in Figure 1 is purely provided for illustration purposes, other modes of presentation being possible.

The XML description of a DVB-IP service provider that does not apply the method shown here will have the following form:

```
  <?xml version="1.0" encoding="UTF-8" ?>
  <ServiceDiscovery
   xmlns="urn:dvb:ipisdns:2003"
   xmlns:xsi="http://www.w3.org/2001/XMLSchema-instance"
   xsi:schemaLocation="urn:dvb:ipisdns:2003 http://192.168.0.2/dvb/DVB-IP-
  SDNS.xsd">
  <ServiceProviderDiscovery>
   <ServiceProvider DomainName="example_sp.com" Version="64">
     <Name Language="FRA">SP exemple</Name>
     <Offering>
      <Push Source="192.168.0.2" Address="224.1.10.1" Port="3937">
       <PayloadId Id="02">
        <Segment ID="0000" Version="5" />
        <Segment ID="0001" Version="7" />
        <Segment ID="0002" Version="9" />
        <Segment ID="0003" Version="6" />
        <Segment ID="0004" Version="5" />
        <Segment ID="0005" Version="16" />
        <Segment ID="0006" Version="7" />
       </PayloadId>
      </Push>
     </Offering>
   </ServiceProvider>
 </ServiceProviderDiscovery>
  </ServiceDiscovery>
```

It can even use a lower number of segments.

To implement the method according to the present invention, the following description for example is used:

```
 <?xml version="1.0" encoding="UTF-8" ?>
 <ServiceDiscovery
  xmlns="urn:dvb:ipisdns:2003"
   xmlns:xsi="http://www.w3.org/2001/XMLSchema-instance"
   xsi:schemaLocation="urn:dvb:ipisdns:2003 http://192.168.0.2/dvb/DVB-IP-SDNS.xsd">
 <ServiceProviderDiscovery>
   <ServiceProvider DomainName="example_sp.com" Version="64">
    <Name Language="FRA">SP exemple</Name>
    <Offering>
      <Push Source="192.168.0.2" Address="224.1.10.1" Port="3937">
        <PayloadId Id="02">
           <Segment ID="0000" Version="5" />
        </PayloadId>
      </Push>
      <Push Source="192.168.0.2" Address="224.1.10.2" Port="3937">
         <PayloadId Id="02">
            <Segment ID="0001" Version="7" />
         </PayloadId>
      </Push>
      <Push Source="192.168.0.2" Address="224.1.10.3" Port="3937">
         <PayloadId Id="02">
            <Segment ID="0002" Version="9" />
         </PayloadId>
      </Push>
      <Push Source="192.168.0.2" Address="224.1.10.4" Port="3937">
         <PayloadId Id="02">
            <Segment ID="0003" Version="6" />
         </PayloadId>
      </Push>
      <Push Source="192.168.0.2" Address="224.1.10.5" Port="3937">
         <PayloadId Id="02">
            <Segment ID="0004" Version="5" />
         </PayloadId>
      </Push>
      <Push Source="192.168.0.2" Address-"224.1.10.6" Port="3937">
         <PayloadId Id="02">
            <Segment ID="0005" Version="16" />
         <PayloadId>
      </Push>
      <Push Source="192.168.0.2" Address="224.1.10.7" Port="3937">
         <PayloadId Id="02">
            <Segment ID="0006" Version="7" />
         </PayloadId>
      </Push>
   </Offering>
  </ServiceProvider>
 </ServiceProviderDiscovery>
 </ServiceDiscovery>
```

The smallest possible form for a segment is the one in which only the description of a single service is placed. For example, for the segment 0000:

```
 <?xml version="1.0" encoding="UTF-8" ?>
 <ServiceDiscovery
   xmlns="urn:dvb:ipisdns:2003"
   xmlns:xsi="http://www.w3.org/2001/XMLSchema-instance"
   xsi:schemaLocation="urn:dvb:ipisdns:2003 http://localhost:8080/dvb/DVB-IP-SDNS.xsd"
   Version="5">
 <BroadcastDiscovery DomainName="example_sp.com" Version="4">
   <ServiceList>
    <SingleService>
     <ServiceLocation>
        <IPMulticastAddress Source="192.168.0.1" Address="224.1.1.1" Port="1234" />
    </ServiceLocation>
    <TextualIdentifier ServiceName="Canal 1" />
    <DVBTriplet OrigNetId="1" TSId="1" ServiceId="1" />
   </SingleService>
  </ServiceList>
 </BroadcastDiscovery>
 </ServiceDiscovery>
```

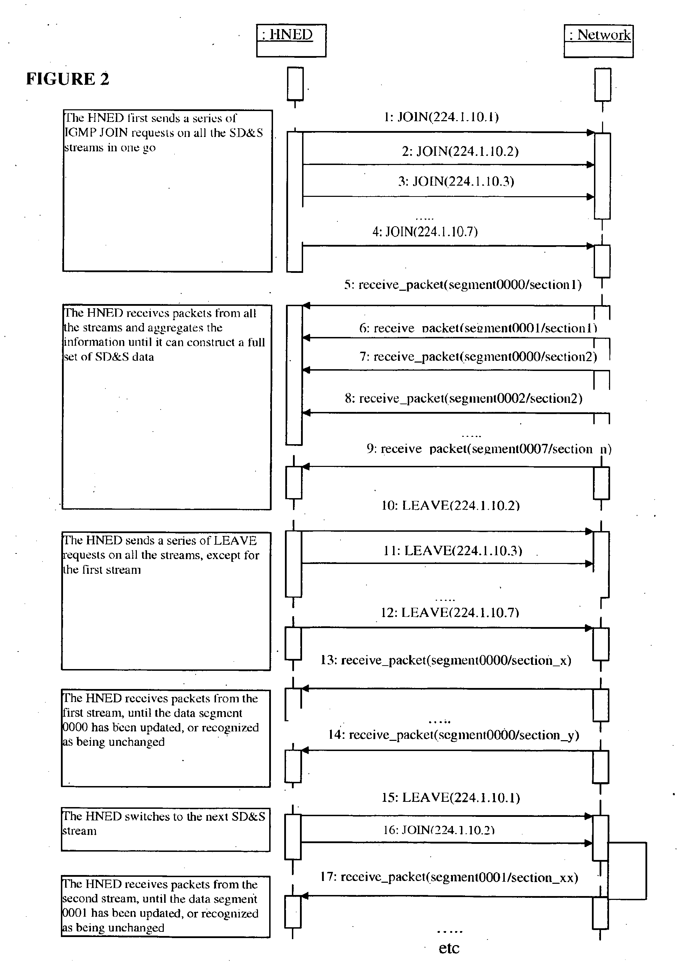

The time sequencing scenario, illustrated in figure 2, shows a sequence of interactions between a terminal (HNED) and the network for the reception of SD&S multicast streams according to the invention. The following strategy is used here:
1. The terminal connects simultaneously to all the streams to initialise its data.
2. The terminal listens to only one stream at a time to detect the possible updates and browses all the streams one after each other starting again when all of them are passed.

Let us suppose that a service provider has 200 television channels in "broadcast" mode. The size of the data for each channel is estimated at 1 kilobyte (this depends on the descriptions).

A broadcast in a single stream of 200 k-bytes on a cycle of 30 seconds gives a bitrate of 53 kbits/s. By applying a maximum partition into 200 streams, a bitrate per stream of 266bits/s is obtained. The maximum update time in this mode increases to 1 hour 40 minutes.

A more interesting approach is to set a suitable marginal bitrate for the reception of updates. If one considers 4kbits/s for example, this gives 2 seconds to send a service of 1 kilobyte. One can therefore group 15 services per stream for a cycle of 30 seconds. 14 streams are therefore used in parallel. The maximum update time goes to 7 minutes for a sequential listening of the various streams. It remains at 30 seconds for a simultaneous listening where the 53kbits/s is found.

One can therefore retain 200 streams in parallel each containing 1 service but by sending them at this same target bitrate of 4kbits/s. The cycle time of each stream thus goes to 2 seconds. The maximum update time by listening in sequence depends on the behaviour of the terminal. If it listens systematically to each stream for 30 seconds, one remains at 1 hour 40 minutes. If it is able to note that it has received a full list in 2 seconds, the update time is still 7 minutes. Note that in this case a single segment being transmitted on a stream, if said segment has not changed content the terminal will know it as soon as it receives the first packet by reading the version number. It can therefore go on immediately to the next stream, shortening the global update time. This is valid as only one segment is generally modified at a time. With this tactic, the update time for simultaneous listening is lowered to 2 seconds, but requires a bitrate of 800kbits/s to be used.

The method according to the present invention is applicable to the DVB-IP standard published to date (ETSI TS 102 034 v1.2.1). However, to facilitate the optimum use of the service information by a terminal, it may be considered to provide it with indications for directing the choices that it makes by connecting to such or such a stream. The composition strategy of the carousels is indeed established by the server of the provider, and it therefore has complete information for qualifying the composition of its streams. The terminal can do this by analysing the information, but this requires greater "intelligence" on its part, and could take up time as it is necessary to read all the data of the carousel to determine whether its content is more or less important for the terminal.

The present invention therefore also proposes the use of two mechanisms that would improve the efficiency of the method for the terminal. Each of them is useful separately and both can be used jointly.
1. The first mechanism consists in giving a priority value to each carousel. A simple relative numerical value is enough, for example a whole number between 1 and 10, other intervals also being able to be chosen. Such an indication of priority allows the terminal to connect more frequently to the streams of higher priority, such that, for said streams the update times are shorter than for the carousels of lower priority. The indication by the server allows service lists for example to be signalled, which by their nature vary frequently in comparison with permanent channels, the service plan of which is almost static.
2. The second mechanism consists in qualifying a carousel as containing information of regional scope. Indeed, the signalling of the regional availability of a service dispenses the terminal from connecting to the service, but has the disadvantage of signalling to all the terminals all the existing services on the considered network. There may be a high proportion of data that is finally unnecessary for a particular terminal. If the service provider groups the descriptions of the services of a region into a same carousel, the terminals that are not in the said region do not need to connect to this carousel. Although a terminal can note this after a first analysis and decide to return "rarely" to this carousel, it would be preferable to mention this property explicitly in the description of the service provider, enabling a terminal not concerned never to receive a "regional" carousel. The description could be similar to the example below, wherein one of the carousels is marked with a regional indication (with uses the syntax proposed by DVB-IP for the services themselves):

   ```
 <?xml version="1.0" encoding="UTF-8" ?>
 <ServiceDiscovery
   xmlns="urn:dvb:ipisdns:2003"
   xmlns:xsi="http://www.w3.org/2001/XMLSchema-instance"
   xsi:schemaLocation="urn:dvb: ipisdns:2003 http://192.168.0.2/dvb/DVB-IP-SDNS.xsd">
 <ServiceProviderDiscovery>
   <ServiceProvider DomainName="example_sp.com" Version="64">
    <Name Language="FRA">SP exemple</Name>
    <Offering>
       <Push Source="192-168.0.2" Address="224.1.10.1" Port="3937">
         <PayloadId Id="02">
           <Segment ID="0000" Version="5" />
         </PayloadId>
      </Push>
      <Push Source="192:168.0.2" Address="224.1.10.2" Port="3937">
        <ServiceAvailability CountryFlag="true" CountryCode="250" RegionFlag="true">
           <cell id="2" />
        </ServiceAvailability>
        <PayloadId Id="02">
          <Segment ID="0001" Version="7" />
        </PayloadId>
      </Push>
      [.....]
      <Push Source="192.168.0.2" Address="224.1.10.7" Port="3937">
        <PayloadId Id="02">
          <Segment ID="0006" Version="7" />
        </PayloadId>
      </Push>
    </Offering>
   </ServiceProvider>
 </ServiceProviderDiscovery>
 </ServiceDiscovery>
```

The invention is described in the preceding text as an example. It is understood that those skilled in the art are capable of producing variants of the invention without leaving the scope of the patent.

## Claims

1. Method for broadcasting service information data streams, **characterized in that** it comprises:
- a first step consisting in partitioning at least one part of the service information between the different streams, and
- a second step consisting in broadcasting the partition from the first step on at least two separate streams to a plurality of terminals.

2. Method for broadcasting service information data streams according to claim 1, **characterized in that** the service information data streams are multicast.

3. Method for broadcasting service information data streams according to claim 1 or 2, **characterized in that** the service information data streams are compliant with the DVB-IP standard.

4. Method for broadcasting service information data streams according to claim 1, 2 or 3, **characterized in that** the service information is split into segments and **in that** the said first step consists in assigning a stream to each segment.

5. Method for broadcasting service information data streams according to claim 5, **characterized in that** some segments are assigned to the same stream.

6. Broadcast server of service information data streams, **characterized in that** it comprises:
- means for partitioning at least one part of the service information between the different streams, and
- means for broadcasting the partition from the first step on at least two separate streams to a plurality of terminals.

7. Broadcast server of service information data streams according to claim 6, **characterized in that** the service information data streams are multicast.

8. Broadcast server of service information data streams according to claim 6 or 7, **characterized in that** the service information data streams are compliant with the DVB-IP standard.

9. Broadcast server of service information data streams according to claim 6, 7 or 8, **characterized in that** the service information is split into segments and **in that** the fact of partitioning is equivalent to assigning a stream to each segment.

10. Broadcast server of service information data streams according to claim 9, **characterized in that** some segments are assigned to the same stream.

## Patentansprüche

1. Verfahren zum Übertragen von Dienstinformationsdatenströmen, **dadurch gekennzeichnet, dass** das Verfahren umfasst:
- einen ersten Schritt, der im Aufteilen mindestens eines Teils der Dienstinformationen zwischen den unterschiedlichen Strömen besteht, und
- einen zweiten Schritt, der im Übertragen der Aufteilung aus dem ersten Schritt in mindestens zwei getrennten Strömen zu einer Mehrzahl von Endgeräten besteht.

2. Verfahren zum Übertragen von Dienstinformationsdatenströmen nach Anspruch 1, **dadurch gekennzeichnet, dass** die Dienstinformationsdatenströme sammelgesendet werden.

3. Verfahren zum Übertragen von Dienstinformationsdatenströmen nach Anspruch 1 oder 2, **dadurch gekennzeichnet, dass** die Dienstinformationsdatenströme mit dem DVB-IP-Standard konform sind.

4. Verfahren zum Übertragen von Dienstinformationsdatenströmen nach Anspruch 1, 2 oder 3, **dadurch gekennzeichnet, dass** die Dienstinformationen in Segmente geteilt werden und dass der erste Schritt im zuweisen eines Stroms zu jedem Segment besteht.

5. Verfahren zum Übertragen von Dienstinformationsdatenströmen nach Anspruch 4, **dadurch gekennzeichnet, dass** einige Segmente demselben Strom zugewiesen werden.

6. Übertragungsserver von Dienstinformationsdatenströmen, **dadurch gekennzeichnet, dass** der Übertragungsserver umfasst:
- Mittel zum Aufteilen mindestens eines Teils der Dienstinformationen zwischen den unterschiedlichen Strömen, und
- Mittel zum Übertragen der Aufteilung aus dem ersten Schritt in mindestens zwei getrennten Strömen zu einer Mehrzahl von Endgeräten.

7. Übertragungsserver von Dienstinformationsdatenströmen nach Anspruch 6, **dadurch gekennzeichnet, dass** die Dienstinformationsdatenströme sammelgesendet werden.

8. Übertragungsserver von Dienstinformationsdatenströmen nach Anspruch 6 oder 7, **dadurch gekennzeichnet, dass** die Dienstinformationsdatenströme mit dem DVB-IP-Standard konform sind.

9. Übertragungsserver von Dienstinformationsdatenströmen nach Anspruch 6, 7 oder 8, **dadurch gekennzeichnet, dass** die Dienstinformationen in Segmente geteilt sind und dass die Tatsache des Aufteilens äquivalent dem Zuweisen eines Stroms zu jedem Segment ist.

10. Übertragungsserver von Dienstinformationsdatenströmen nach Anspruch 9, **dadurch gekennzeichnet, dass** einige Segmente demselben Strom zugewiesen sind.

## Revendications

1. Procédé de diffusion de flux de données d'informations de service, **caractérisé en ce qu'**il comprend :
- une première étape consistant à partitionner au moins une partie des informations de service entre les différents flux ; et
- une seconde étape consistant à diffuser la partition issue de la première étape sur au moins deux flux distincts vers une pluralité de terminaux.

2. Procédé de diffusion de flux de données d'informations de service selon la revendication 1, **caractérisé en ce que** les flux de données d'informations de service sont multicast.

3. Procédé de diffusion de flux de données d'informations de service selon la revendication 1 ou 2, **caractérisé en ce que** les flux de données d'informations de service sont conformes à la norme DVB-IP.

4. Procédé de diffusion de flux de données d'informations de service selon la revendication 1, 2, ou 3 **caractérisé en ce que** les informations de service sont découpées en segments et **en ce que** ladite première étape consiste en l'attribution d'un flux à chaque segment.

5. Procédé de diffusion de flux de données d'informations de service selon la revendication 5, **caractérisé en ce que** certains segments se voient affecter le même flux.

6. Serveur de diffusion de flux de données d'informations de service, **caractérisé en ce qu'**il comprend :
- des moyens pour partitionner au moins une partie des informations de service entre les différents flux ; et
- des moyens pour diffuser la partition issue de la première étape sur au moins deux flux distincts vers une pluralité de terminaux.

7. Serveur de diffusion de flux de données d'informations de service selon la revendication 6, **caractérisé en ce que** les flux de données d'informations de service sont multicast.

8. Serveur de diffusion de flux de données d'informations de service selon la revendication 6 ou 7, **caractérisé en ce que** les flux de données d'informations de service sont conformes à la norme DVB-IP.

9. Serveur de diffusion de flux de données d'informations de service selon la revendication 6, 7 ou 8, **caractérisé en ce que** les informations de service sont découpées en segments et **en ce que** le fait de partitionner équivaut à attribuer un flux à chaque segment.

10. Serveur de diffusion de flux de données d'informations de service selon la revendication 9, **caractérisé en ce que** certains segments se voient affecter le même flux.
